(19) **Europäisches Patentamt**

**European Patent Office**

**Office européen des brevets**

(11) Veröffentlichungsnummer : **0 060 395 B2**

(12) # NEUE EUROPÄISCHE PATENTSCHRIFT

(45) Veröffentlichungstag der neuen Patentschrift :
27.03.91 Patentblatt 91/13

(51) Int. Cl.⁵ : **E06B 7/28, H05K 5/00**

(21) Anmeldenummer : **82101072.5**

(22) Anmeldetag : **12.02.82**

---

(54) **Türanlage.**

---

(30) Priorität : **04.03.81 DE 3108056**

(43) Veröffentlichungstag der Anmeldung :
**22.09.82 Patentblatt 82/38**

(45) Bekanntmachung des Hinweises auf die
Patenterteilung :
**19.12.84 Patentblatt 84/51**

(45) Bekanntmachung des Hinweises auf die
Entscheidung über den Einspruch :
**27.03.91 Patentblatt 91/13**

(84) Benannte Vertragsstaaten :
**AT BE CH FR GB IT LI NL SE**

(56) Entgegenhaltungen :
**CH-B- 576 197**
**DE-A- 15 663**
**DE-A- 2 264 205**
**DE-A- 2 816 422**
**DE-A- 2 921 485**
**DE-B- 1 018 502**
**DE-B- 1 922 081**
**DE-C- 854 814**
**DE-C- 967 559**
**DE-C- 968 280**
**DE-U- 6 913 085**
**DE-U- 7 146 259**

(56) Entgegenhaltungen :
**DE-U- 7 238 995**
**DE-U- 7 424 705**
**DE-U- 7 539 292**
**DE-U- 7 809 899**
**FR-A- 1 075 056**
**FR-A- 2 122 912**
**US-A- 2 043 904**
**US-A- 2 453 832**
**US-A- 3 967 164**
**Prospekt "ticivox system"**
**Katalog "SEKO 50 Jahre 1920-1970", 1970**
**Katalog "SEKO Sprechanlagen und Signaltechnik 197**
**Katalog "SEKO Sprechanlagen und Signaltechnik 197**
**Prospekt der Fa. Busch-Jäger Elektro "Die Sprechanlage aus der Steckdose" (Impressum: BJE 236/4.78-0502 WD)**

(73) Patentinhaber : **S. Siedle & Söhne Telefon- und Telegrafenwerke**
**Bregstrasse 1 Postfach 20**
**W-7743 Furtwangen1 (DE)**

(72) Erfinder : **Meurer, Eberhard**
**Bismarckstrasse 2**
**W-7743 Furtwangen (DE)**

(74) Vertreter : **Baumann, Eduard, Dipl.-Phys.**
**Postfach 1201 Sattlerstrasse 1**
**W-8011 Höhenkirchen/München (DE)**

**EP 0 060 395 B2**

## Beschreibung

Die vorliegende Erfindung bezieht sich auf eine Türanlage gemäß dem Oberbegriff des Anspruches 1.

Eine derartige Türanlage ist aus der DE-A 2921485 bekannt. Hier sind an einer flachen Befestigungsplatte unterschiedliche Öffnungen für unterschiedliche Funktionseinheiten wie Klingeltasten, Glasscheibe für einen dahinter liegenden Scheinwerfer und Schlitze für einen dahinter liegenden Türlautsprecher sowie ein dahinter liegendes Mikrophon vorgesehen. Die Befestigungsplatte ist am Gehäuse schwenkbar angeordnet.

Die DE-B 1 922 081 zeigt in einer Befestigungsplatte untereinanderliegende Aussparungen für drei unterschiedliche Kontakteinsätze, in welche übliche Klingeltasten, kombiniert mit danebenliegenden Namensschildern, eingebaut werden können. Diese Klingelplatte kann lediglich in üblicher Weise mit einem Lichtdrücker und einer Sprechanlage kombiniert werden, d.h. offenbar völlig getrennt in einem eigenen Gehäuse. Die dargestellten schmalen Öffnungen sind offenbar nur für das Anbringen von Namensschildern mit danebenliegenden Klingeltasten geeignet. Eine Lehre, in die Öffnungen nachträglich unterschiedliche Funktionseinheiten, etwa statt einer Klingeltaste einen Türlautsprecher, einzubauen, sind dieser Druckschrift nicht zu entnehmen, somit auch nicht die Anregung, einen derartigen nachträglichen Einbau von Funktionseinheiten anderer Funktion ohne Beeinträchtigung des äußeren Erscheinungsbildes durchzuführen.

In der FR-A 2122912 ist eine Türanlage vorbeschrieben, die aus einer Vielzahl von Einzelteilen im Baukastensystem variabel zusammensetzbar ist. Hierbei sind im wesentlichen zwei seitliche Führungsschienen vorgesehen, in welche entsprechende seitliche Gleitschuhe an verschiedenen Funktionseinheiten wie Klingeltasten, Türlautsprecher einsetzbar sind. An den beiden stirnseitigen Enden sind die beiden Führungsschienen durch entsprechende Abdeckleisten miteinander verbunden.

Aus dem Busch-Jaeger Elektro Gm bH- Katalog "Die Sprechanlage aus der Steckdose" 1978 ist eine Wohnungssprechanlage mit zwei Teilgeräten bekannt, die sich zu einer Einheit ergänzen. Dabei paßt je ein Teilgerät in eine Schalter- Unterputzsteckdose und ist über einen umlaufenden Blendrahmen oder Abdeckrahmen abgedeckt, auf den ein Spezialdeckel aufgesetzt und mit dem darunterliegenden Teilgerät verbunden ist. Ein Deckel bildet eine Jalousie für einen Lautsprecher, der andere Deckel weist Durchtrittsöffnungen für Steuerknöpfe etc. auf. Eine Befestigungsplatte, insbesondere ein Rasterrahmen mit gleichförmigen Öffnungen zum Durchschieben von Funktionseinheiten ist nicht vorgesehen. Die beiden Teilgeräte jeder Funktionseinheit werden vielmehr vor dem Einsetzen des Abdeckrahmens und jedes Spezialdeckels je in einer Unterputzdose befestigt, die Tragorgane sind unterhalb des aufgesetzten Abdeck- Blendrahmens an dessen zum Innenraum des Gehäuses hin gerichteter Seite angeordnet. Wendet man die beiden Teilgeräte nicht übereinander, sondern nebeneinander an, so erfordert dies anders geformte Abdeckungen oder Deckel, da diese keine quadratische Form aufweisen. Da die aus zwei Teilgeräten bestehende Sprechanlage längliche Form hat, kann sie als solche auch nicht in eine beliebige Öffnung eingesetzt oder um 90° gedreht werden.

Die deutsche Gebrauchsmusterschrift 7216999 betrifft ein Baukastensystem für Experimentier- und Demonstrationszwecke, insbesondere für Schulen als Lehr-, Lern- und Ausbildungsmittel sowie für elektronische Untersuchungslaboratorien. Derartige Experimentier- kästen werden in Innenräumen eingesetzt und sind nicht für die spezielle Problematik von Türanlagen, die außen der Witterung ausgesetzt sind und darüber hinaus bestimmte optische Anforderungen erfüllen müssen, ausgelegt. Ein Umstecken von einzelnen Elementen zum Erhalt einer Gesamtschaltung erfolgt ausschließlich nach schaltungstechnischen Gesichtspunkten, soweit dies aus schaltungstechnischen Gründen überhaupt möglich ist.

Der Prospekt "SEKO Sprechanlagen und Signaltechnik 1976" zeigt Befestigungsplatten, die teilweise übereinander in gleichförmigen Öffnungen Klingeltasten aufweisen, teilweise je doch auch Klingeltasten in Kombination mit einem Türlautsprecher. Die Befestigungsplatte ist nicht schwenkbar angeordnet, sondern durch Schrauben mit dem Gehäuse verbunden. Zumindest die Türlautsprecher sind nicht durch die Öffnung hindurchschiebbar, sondern werden hinter der auf der Befestigungsplatte angeordneten Jalousie angeordnet. Weder die Klingeltasten noch der Türlautsprecher bzw. dessen sichtbare Jalousie verdecken die Befestigungsplatte vollständig, diese bestimmt vielmehr das optische Erscheinungsbild mit.

Der Erfindung liegt die Aufgabe zugrunde, eine Türanlage gemäß dem Oberbegriff des Anspruches 1 so auszugestalten, daß ein flexibles Baukastensystem geschaffen wird. Neben einer einfacheren mechanischen Montage und Verdrahtung und einer einfacheren Reparatur wird hierbei eine größere Variationsbreite bei der Anbringung und nachträglichen Änderung oder Ergänzung unterschiedlicher Funktionseinheiten ohne Beeinträchtigung des äußeren Erscheinungsbildes ermöglicht, auf das die Befestigungsplatte keinen Enfluß hat.

Die Aufgabe wird erfindungsgemäß durch die Merkmale des Kennzeichens des Anspruches 1 gelöst.

Weitere Ausgestaltungen der Erfindung sind in den abhängigen Ansprüchen unter Schutz gestellt.

Beim Erfindungsgegenstand wird ein Gehäuse mit einem Rasterrahmen lösbar gelenkig verbunden. Der Rasterrahmen weist mehrere gleiche Öffnungen auf, um Funktionseinheiten mit gleichen äußeren Abmessungen, aber unterschiedlicher Funktion, aufzunehmen. Diese Funktionseinheiten haben nach außen hin verbreiterte Verblendkanten, um den Rasterrahmen einschließlich der schmalen Verbindungsstege abzudecken. Auf diese Weise entsteht ein einheitliches und ansprechendes Aussehen der Türanlage, unabhängig von der Art der Funktionseinheiten. Der innere Teil der Funktionseinheiten ist daher geringer in den Abmessungen, so daß die Funktionseinheiten einfach von außen durch die Öffnung oder Öffnungen des Rasterrahmens hindurchgesteckt werden können. Sieht man an Seitenflächen, vorzugsweise an zwei gegenüberliegenden Seitenflächen des schmäleren, nach innen ragenden Teiles der Funktionseinheiten Aussparungen vor, an welchen durch eine Federkraft vorgespannte Spreizklemmen vorgesehen sind, die in Höhe der Übergangskante zwischen schmälerem inneren Bauteil und breiterem äußeren Bauteil der Funktionseinheit nach außen gerichtete Häkchen aufweisen, so schnappt das Bauteil beim Einschieben automatisch in den flach ausgebildeten Rasterrahmen ein. Will man die Funktionseinheit wieder entfernen, beispielsweise durch eine andere ersetzen, so ist es lediglich erforderlich, diese Spreizhaken entgegen der Federkraft in die Aussparungen der Funktionseinheiten hineinzudrücken, um diese nach außen abnehmen zu können.

Als Funktionseinheiten können verschiedene, jeweils in eine einheitliche Rasteröffnung einschiebbare Teile miteinander kombiniert werden, beispielsweise ein Türlautsprecher mit Mikrophon, eine große Klingeltaste oder mehrere kleine, den gleichen Platz einnehmende Klingeltasten, ein beleuchtetes Nummernschild und dergleichen.

Die Gelenkverbindung zwischen Gehäuse und Rasterrahmen kann zweckmäßigerweise darin bestehen, daß man an einer Kante zwei L-förmig aufgebogene Laschen so gegeneinander gelenkig miteinander verbindet, so daß die beiden L-förmigen Schenkel in etwa ein Rechteck miteinander bilden.

Die Befestigung des Blechteiles am Gehäuse erfolgt zweckmäßigerweise über je zwei Führungsschienen, in welche das L-Förmige Teil, das vorzugsweise aus Blech besteht, jedoch auch aus Kunststoff gemacht werden kann, einschiebbar ist. In diesem Teil ist ein Schraubengewinde angeordnet, und die Befestigung erfolgt durch eine am Gehäuse vorgesehene Öffnung. Bildet man die Gehäuseöffnung schlitzförmig aus, dann ist gleichzeitig eine Justierung des türförmigen Einbaurahmens gegenüber dem Gehäuse möglich.

An der Seite des Einbaurahmens, der der Gelenkverbindung gegenüberliegt, läßt sich ein vorzugsweise mit Schlüssel bedienbares Schloß anbringen, beispielsweise ein Verriegelungsschloß mit zwei Riegeln, die über zwei Schlitze des Einbaurahmens in entsprechende Ösen an der Kante des Gehäuses eingreifen können.

Sowohl das Gelenk als auch das Schloß können nach außen hin durch Verblendleiste abgedeckt werden, die in Tiefe, Form und Farbe an die eingesetzten Funktionseinheiten angepaßt werden können, so daß sich ein einheitliches Gesamtbild der Türanlage ergibt.

In eine derartige Verblendleiste läßt sich in eleganter Weise ein Mikrophon integrieren, das über eine Leitung mit einer Funktionseinheit in Form eines Lautsprecher-Mikrophons verbunden ist. Es läßt sich nämlich in einer Verblendleiste eine kleine Kunststoffkammer anbringen, die in einem Herstellungsvorgang mit der Verblendleiste hergestellt werden kann und in die ein bestimmtes Mikrophon genau hineinpaßt.

Durch die besondere Ausbildung einer Kammer innerhalb dieser Verblendleiste ist es möglich, ein Mikrophon außerhalb der eigentlichen Mikrophon-Lautsprecher-Einheit an einem entfernten Punkt der Gesant-Türanlage unterzubringen. Dadurch werden lästige Rückkopplungseffekte und damit verbundenes Pfeifen weitgehend vermieden.

Das Gehäuse besteht zweckmäßigerweise aus einem rechteckigen Rahmen, dessen Rückseite bis auf einen umlaufenden Rand und Verstärkungsstegen offen ist. Am umlaufenden Rand können diagonal angeordnete Längsschlitze für die Befestigung mit einem Unterputzgehäuse angebracht werden. Bevorzugt man stattdessen eine unmittelbare Befestigung des Gehäuses an der Wand, so sind an den Seitenwänden des Gehäuses Führungsrillen vorgesehen, an weichen Spannklauen geführt werden können, die durch ein Schraubengewinde mit einem Schraubenbolzen in Verbindung stehen, der durch eine Öffnung an der Vorderseite des Gehäuses hindurchgeht.

Wie schon erwähnt, läßt sich das Gehäuses auch in einem Unterputzgehäuse befestigen, wobei die erwähnten diagonalen an den vier Ecken des Gehäuses angeordneten Längsschlitze Befestigungsbolzen aufnehmen können, welche mit entsprechenden, an den Ecken des Unterputzgehäuses eingelassenen Schraubgewinden zusammenwirken. Die Schlitzform der Befestigungsöffnungen ermöglicht dabei eine gewisse Justierung des Gehäuses gegenüber dem Unterputzrahmen sowie den Ausgleich von Ungenaulgkeiten beim Einbau des Unterputzgehäuses an die Wand.

Es ist auch möglich, das Gehäuse in einen Abdicht-, Ausgleichs- und Verblendrahmen einzufügen und gemeinsam mit diesem an der Mauer oder an einem Unterputzgehäuse zu befestigen. Der Querschnitt dieses Rahmens kann U-förmig sein, wobei der zur Wand zu offene Rahmen eine passende Gummiabdichtung aufnehmen kann, die beim Befestigen des eingelegten Gehäuses an die Wand gepreßt wird, um eine Abdichtung, insbesondere gegenüber von oben an der Wand herunterlaufendes Wasser, zu gewährleisten. Dafür wird zweckmäßigerweise eine spezielle Dichtung vorgesehen, welche zu den Seitenwänden des U-förmigen Querschnittes hin mehrere, beispilsweise drei, Abdichtkanten oder -lippen aufweist, zur Wand zu einen geschlossenen Hohlraum aufweist und für die Berührung zur Wand zwei abgerundete Berührungslippen aufweist.

Ein Ausführungsbeispiel der Erfindung ist in der Zeichnung dargestellt.

Es zeigt :

Figur 1 ein Explosionsbild einer Türanlage mit einer Funktionseinheit, einem angslenkten, geöffneten Rasterrahmen, einem Abdicht-, Ausgleichs- und Verblendrahmen, einem Gehäuse sowie einem Unterputzgehäuse,

Figur 1a die Einzelheit A von Figur 1 in vergrößerter Darstellung, d.h. die Klauenbefestigung des Gehäuses ohne Unterputzgehäuse, im Schnitt,

figur 2 eine Frontansicht einer Türanlage im montierten, geschlossenen Zustand einschließlich Abdicht-, Ausgleichs- und Verblendrahmen,

Figur 2a die Darstellung von Figur 1 im Schnitt,

Figur 3a ein Detail der Gelenkverbindung zwischen Gehäuse und Rasterrahmen von oben,

Figur 3b die Darstellung von Figur 3a im Schnitt,

Figur 3c ein anderes Ausführungsbeispiel der Gelenkverbindung zwischen Gehäuse und Rasterrahmen mittels einer Rastbefestigunf,

Figur 4 des Verriegelungsschloß,

Figur 5 eine Verblendleiste für das Verriegelungsschloß,

Figur 6 eine Verblendleiste für das Gelenk,

Figur 7 die Verblendleiste, den unteren Teil des Rasterrahmens, den benachbarten Teil des Gehäuses, tellweise geschnitten, sowie die Gelenkverbindung,

Figur 8 den Abdicht-, Ausgleichs- und Verblendrahmen mit Gummidichtung im Schnitt.

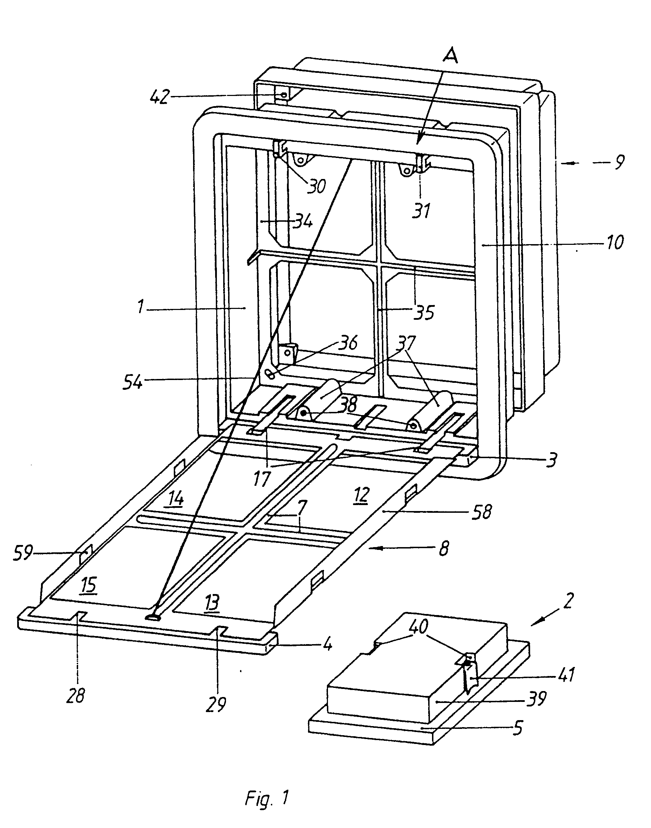

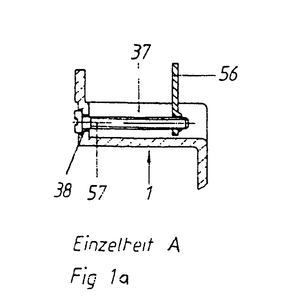

In Figur 1 ist eine Explosionszeichnung eines Ausführungsbeispieles dargestellt. Dabei ist das Gehäuse allgemein mit 1, der angelenkte Rasterrahmen allgemein mit 8, eine Funktionseinheit allgemein mit 2, ein Unterputzgehäuse allgemein mit 9, ein Abdicht-, Ausgleichs- und Verblendrahmen allgemein mit 10 und eine Gelenkverbindung allgemein mit 17 bezeichnet.

Die Funktionseinheit 2 zeigt ein äußeres Teil 5, das im eingesetzten Zustand den Rasterrahmen 8 bzw. dessen Zwischenstege 7 überdeckt und darauf aufsitzt. Außerdem ist ein abgestuftes innerses, durch den Rasterrahmen 8 hindurchragendes Teil 39 der Funktionseinheit 2 zu erkennen. An zwei gegenüberiegenden Seitenwänden des inneren Bauteiles 39 sind schlitzförmige Aussparungen 40 zu erkennen, in weichen vorgespannte Metallplättchen 41 vorgesehen sind, welche an der Stufenfläche des äußeren Teiles kleine Häkchen aufweisen. Schiebt man die Funktionseinheit 2 von außen durch eine der gleichförmigen Öffnungen 12-15 des Rasterrahmens 8 hindurch, so rasten diese Häkchen hinter dem flachen Rasterrahmen bzw. dessen Verbindungsstege 7 ein. Zum Lösen dieser Rasterverbindung brauchen lediglich die zwei gegenüberliegenden Federplättchen in die Aussparung 40 zurückgedrückt zu werden, wodurch sich die Funktionseinheiten 2 leicht nach außen herausnehmen lassen.

In Figur 1 ist auch die Verblendleiste 4 für das Schloß sowie die Verblendleiste 3 für das Gelenk 17 zu erkennen, welche geringfügig über den Rasterrahmen 8 vorstehen, um eine einheitliche Fläche mit den aufgesetzten Funktionseinheiten 2 zu bilden.

Im Gehäuse 1 sind an zwei gegenüberliegenden Seiten Führungsrillen 37 zu erkennen, an deren Vorderseite Bohrungen 38 zur Aufnahme von Spannklauen vorgssehen sind. Am hinteren Gehäuserand ist ein umlaufender Rand 34 zu erkennen, an dessen Ecken diagonalgestellte Längsschlitze 36 zur Aufnahme von Befestigungsschrauben vorgesehen sind. Außerdem sind an der Vorgerkante des Gehäuses, die der Gelenkverbindung 17 gegenüberliegt, vorstehende Ösen 30 und 31 vorgesehen, in welche die Riegel des Schlosses (weiter unten beschrieben) eingreifen können. An der Rückseite des Gehäuses sind weiterhin kreuzförmig Stege 35 zur Verstärkung vorgesehen.

Am Unterputzgehäuse 9 sind Öffnungen 42 für in Hohlräumen eingelegte Schraubenmuttern vorgesehen, wobei dieser Hohlraum am Boden durch einen Pfropfen verschlossen werden kann, um das Herausfallen der Schraubenmuttern zu verhindern.

Der Rasterrahmen 8 weist zwei gegenüberliegende seitliche Verstärkungsleisten 58 auf, um die Stabilität zu erhöhen. Damit die Funktionseinheiten dennoch in jeder Stellung, sei es waagerecht oder senkrecht, leicht entfernt werden können, ist es erforderlich, in diesen Verstärkungsleisten Im Bereich der Spreizklemmen in Form von Metallplättchen 41 entsprechende Öffnungen 59 vorzusehen.

Aus Figur 1 ist auch eine Anschlagsschnur 54 zwischen Rasterrahmen 8 und Gehäuse 1 zu erkennen, die den fürförmigen Rasterrahmen in einem Winkel von etwa 90° geöffnet hält.

Figur 1a zeigt die Einzelheit A von Figur 1 im Schnitt, nämlich einen Ausschnitt aus dem Rahmen 1 mit einer Öffnung 38 an seinem Rand, durch die eine Schraubenmutter 57 hindurchragt. Diese Schraubenmutter 57 ist mit einer Spannklaue 56 verschraubt, die auf diese Weise entlang einer Führungsrille 37 verstellbar ist. Das äußere Ende der Spannklaue 56 kann somit auf die Wandrückseite, beispielsweise eine Holzlatte drücken und auf diese Weise eine einfache Befestigung des Gehäuses 1 ermöglichen.

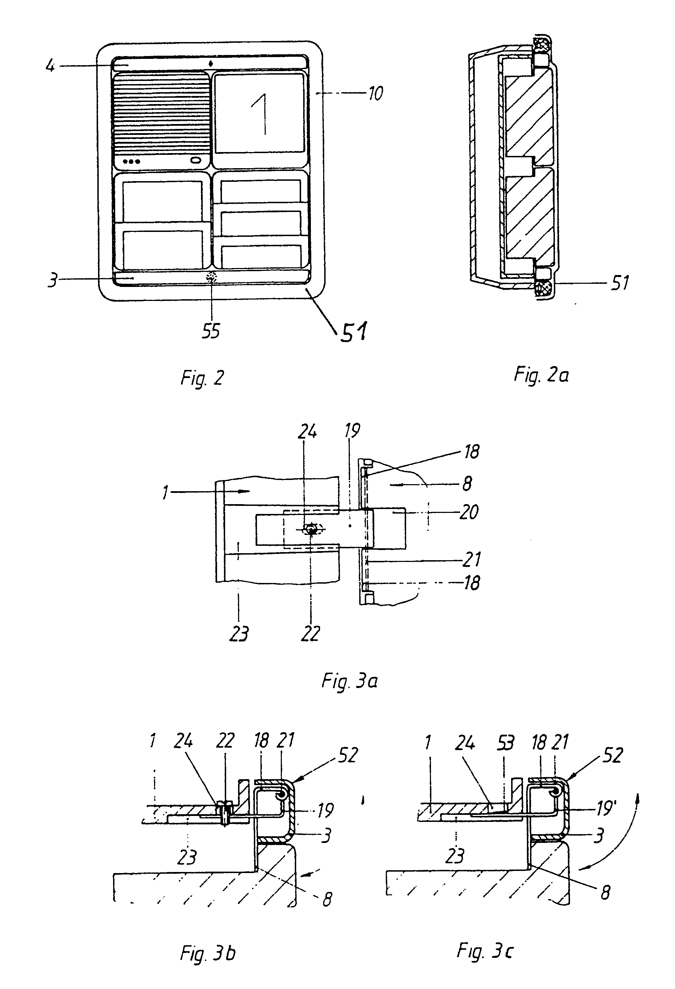

Figur 2 zeigt eine Frontansicht einer Türanlage, bei der neben dem Abdicht-, Ausgleichs- und Verblendrahmen 10 oben links eine Lautsprecher-Mikrophon-Einheit, rechts eine (beleuchtete) hausnummer und unten eine Namens-Klingel-Einheit mit drei bzw. zwei Klingeltasten vorgesehen ist. Es ist zu erkennen, daß diese vier unterschiedlichen Funktionseinheiten ein geschlossenes, gefälliges Ganzes bilden.

In Figur 2 ist zusätzlich eine transparente, flexible Kunststoff-Schutzhaube 51 dargestellt, deren Außenabmessungen dem Blendrahmen 10 angepaßt sind. Unter Umständen kann die äußere Form dieser Abdeckhaube auch noch der Form bestimmter Funktionsmodule angepaßt werden. Dises Schutzhaube stellt einen sehr wirksamen Schutz der gesamten Türanlage vor Mörtel und sonstigen Beeinträchtigungen beim Bau dar. Auf diese Weise ist es möglich, erstmals eine Türanlage bereits im Rohbau zu installieren, ohne daß sie durch die nachfolgenden groben Maurer- und Verputzarbeiten beeinträchtigt würde. Die Form dieser Abdeckhaube und das verwendete Material erlauben es sogar, die Türanlage bereits in diesem Zustand zu benutzen, da die Funktionstasten durch die dünne transparente Folie hindurch sichtbar und auch betätigbar sind. Sogar die Schallübertragung reicht aus, um die Lautsprecher-Mikrophon-Einheit zu benutzen.

Figur 2a zeigt schematisch die Anordnung von Figur 2 im Schnitt.

Figur 3a und Figur 3b zeigen Einzeiheiten der Gelenkverbindung zwischen Gehäuse 1 und Rasterrahmen 8. An zwei Stellen ist die Endkante 18 des Rasterrahmens 8 L-förmig nach außen aufgebogen und trägt an seinen freien Enden einen Gelenkbolzen 21. Um diesen Gelenkbolzen 21 ist in der in Figur 3b ersichtlichen Weise eine L-förmige Gegenlasche 19 aus Blech oder Kunststoff so angeordnet, daß sich bei Öffnung des türförmigen Rasterrahmens 8 um 90° etwa ein Viereck oder Quadrat blidet. Am Gehäuse 1 sind für jede Gegenlasche 19 zwei Schienen 23 vorgesehen, in welche das freie Ende der Gegenlasche 19 einschiebbar ist. Weiterhin ist in dieser Gegenlasche 19 eine Schraubenöffnung vorgesehen. Durch Öffnungen 24, vorzugsweise in Form von Langlöchern, innerhalb des Gehäuse 1 befestigt und gegebenfalls der Rasterrahmen 6 gegenüber diesem Gehäuse justiert werden.

Figur 3c zeigt ein anderes Ausführungsbeispiel der schwenkbaren Verbindung zwischen Rasterrahmen 8 und Gehäuse 1. Bei diesem ausführungsbeispiel ist an der L-förmigen Gegenissche 19' kein Schraubenloch, sondern statt dessen ein Federhaken 53 vorgesehen, der zwischen die Schienen 23 hindurch im Langloch 24 einrastet. Dies vereinfacht Herstellung und Montage.

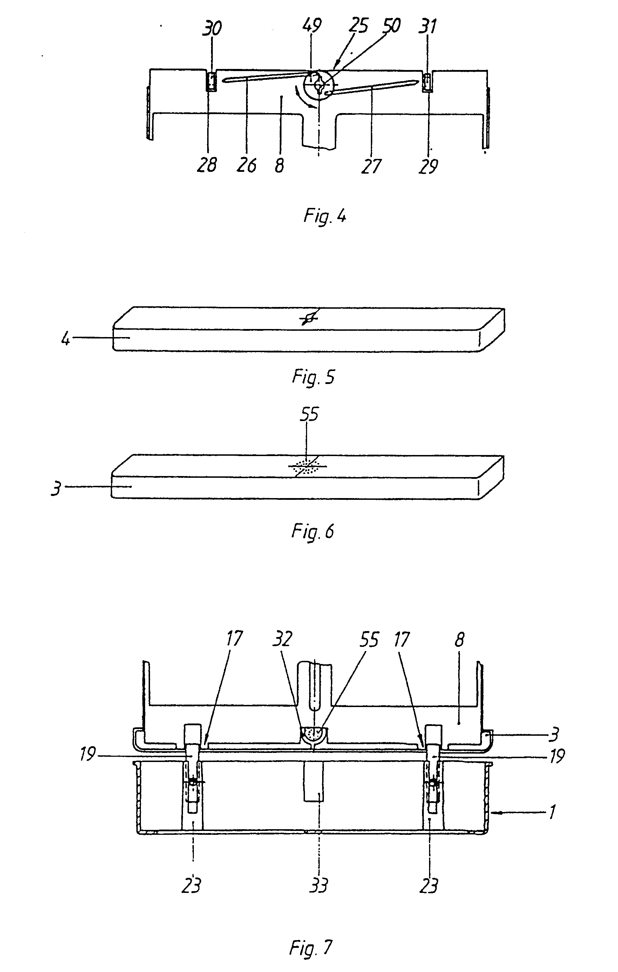

Figur 4 zeigt das allgemein mit 25 bezeichnete Verriegelungsschloß, das auf dem Rasterrahmen 8 angeordnet ist. Vom Mittelteil 49 mit dem Schlüsselloch 50 gehen zwei Riegel 26 und 27 aus, die beim Drehen des Mitteltelles 49 in Aussparungen 28 und 29 des Rasterrahmens 8 eingreifen können. Bei geschlossenem Rasterrahmen 8 greifen die Enden dieser Riegel 26 und 27 dadurch in Ösen 30 und 31 ein, die an den Vorderkanten des Gehäuses 1 angeordnet sind.

Figur 5 zeigt die Verblendleiste 4 für das Verriegelungsschloß 25 mit einem Durchbruch für das Schlüsselloch.

figur 6 zeigt eine entsprechende Verblendleiste 3 für das Gelenk 17. Dabei ist eine Vielzahl von Öffnungen 55 für den Schalldurchtritt des darunterliegenden Mikrophons erkennbar.

In Figur 7 ist eine, tellweise geschnittene, Seitenwand des Gehäuses 1 sowie ein Teil des damit über ein Gelenk 17 verbundenen Rasterrahmens 8 zu erkennen, wobei gleiche Teile wie in vorhergehenden Figuren bezeichnet wurden. Darin ist die besondere Ausbildung der Gelenkverbindung 17 zu erkennen. Darüberhinaus ist die im wesentlichen U-förmige Ausbildung einer nach innen offenen Kammer 32 für die Aufnahme eines Mikrophons zu erkennen. Gegenüber der Mikrophonkammer 32 ist ein Schlitz 33 im Gehäuse 1 vorgesehen, der sich in Richtung zum Mikrophongehäuse 32 vertieft, um die Mikrophonzuleitungen besser herausführen zu können.

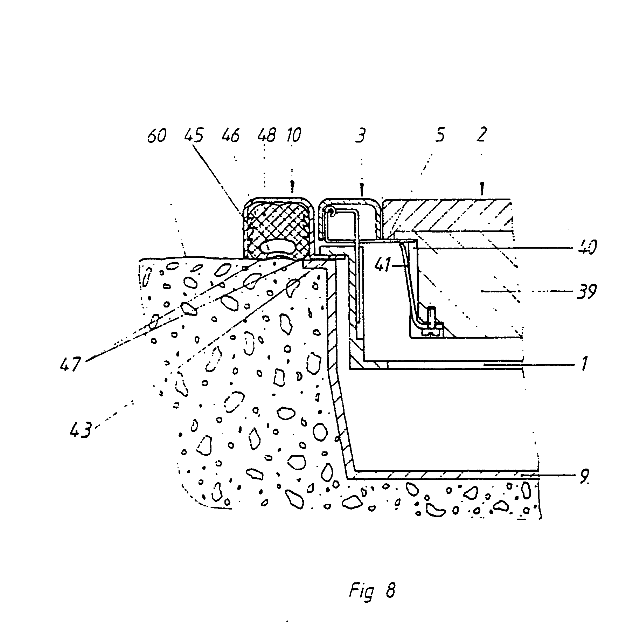

In Figur 8 ist ein Querschnitt des Avdicht-, Ausgleichs- und Verblendrahmens 10 sowie des darauf aufgesetzten Gehäuses 1 zu erkennen. Das Gehäuse 1 ist auf eine Auflagerkante 43 des Rahmens 10 aufgesetzt. Diese Auflagerkante 43 ist nach unten derart abgesetzt, daß sich zwischen oberfläche des Rahmens 10 und den Funktionseinheiten sowie den Verblendleisten 3 und 4 im wesentlichen eine eiheltliche Fläche ergibt. Der Rahmen 10 hat im gezeigten Ausführungsbeispiel U-förmigen Querschnitt und ist gegen die Wand 60 zu offen. In diesem Rahmen mit U-förmigen Profil ist eine spezielle Abdichtung 48 eingelegt, die beim Befestigen des Gehäuses 1 mit dem Unterputzgehäuse 9 oder der Wand 60 über Spannklauen 56 gegen die Wand 60 abdichtend gedrückt wird. An die Seitenteile des U-förmigen Profils drücken drei abgeschrägte Rippen 45, welche einen sicheren Halt der Abdichtung im U-förmigen Profil ermöglichen. Während der obere Teil der Abdichtung aus Vollmaterial ausgebildet ist, besteht der untere Teil aus einem hahlraumförmigen Querschnitt 46. An der mit der Wand 60 in Berührung stehenden Fläche der Abdichtung 48 sind zwei umlaufende Abdichtlippen vorgesehen, welche eine gute Abdichtung gegenüber Feuchtigkeit ermöglichen. Als Material wird zweckmäßigerweise Gummi, insbesondere Moosgummi, verwendet.

Es sei erwähnt, daß die verbreiterten Auflageflächen der Funktionseinheiten mit dem Rasterrahmen 8 ebenfalls eine übliche Gummiabdichtung vorzugsweise aus Moosgummi, aufweisen.

Allgemein sei erwähnt, daß die einzelnen Funktionseinheiten der beschriebenen Türanlage durch einfaches Umstecken sowohl in horizontaler als auch in vertikaler Weise angeordnet werden können. Auch der Türanschlag kann rechts, links, unten oder oben frei wählbar sein. Die Anordnung ist somit nicht nur nach Zweckmäßigkeitsgesichtspunkten, sondern auch nach optischen Gesichtspunkten sehr variabel. Will man später irgendwelche Änderungen vornehmen, so kann dies in einfachster Weise geschehen. Ändert sich beispielsweise die Anzahl der Hausbewohner, so braucht lediglich die Funktionseinheit beispielsweise für drei Klingeltasten einschließlich Namensschildern gegen eine Funktionseinheit mit zwei Klingeltasten ausgewechselt zu werden. Gleiches gilt selbstverständlich für das Auswechseln defekter Teile.

Die Funktionseinheiten können einstückig oder vorzugsweise zweistückig ausgebildet sein. Während der sichtbare äußere Abschnitt aus witterungsbeständigem und optisch ansprechendem Material bestehen muß, ergeben sich für den rückwärtigen Teil andere Materialanforderungen, nämlich insbesondere mechanische Festigkeit, während es auf eine besonders gute Oberflächenbehandlung weniger ankommt. Es sei allgemein erwähnt, daß die Verwendung eines Gehäuse zusammen mit einem Unterputzgehäuse eine Justierung dieses Gehäuses gegenüber dem Unterputzrahmen und damit einen gewissen Tiefenausgleich für den Putz ermöglicht. Wie bereits erwähnt, ist es darüberhinaus möglich, die Türanlage an einer Hohlwand zu befestigen. Es sei auch erwähnt, daß der Dichtungsgummi des Dicht- und Abblendrahmens einen großen Differenzausgleich ermöglicht. Die Türanlage ist problemlos in gleicher Weise bei Beton, bei gemauerten Wänden und Hohlwänden möglich. Neben einer lotrechten ist auch eine waagerechte Befestigung möglich.

Nicht zuletzt bedingt das Baukastensystem erhebliche Vorteile für die Lagerhaltung beim Händler. Er muß nicht eine Vielzahl unterschiedlichster Türanlagen bereithalten, sondern nur ein einheitliches Grundsystem mit Gehäuse und Rasterrahmen, zu denen dann die einzelnen Funktionseinheiten dazukommen.

**Ansprüche**

1. Türanlage mit einem Gehäuse (1), mit Funktionseinheiten (2) unterschiedlicher Funktion wie Namensschilder, Klingeltasten, Türlautsprecher und dergleichen, mit einer die einzelnen Funktionseinheiten gemeins am aufnehmenden, mehrere nebeneinander und oder übereinander liegende Öffnungen aufweisenden Befestigungsplatte, die schwenkbar und feststellbar mit dem Gehäuse verbunden ist, sowie mit Abdichtungsund Verblendmitteln, gekennzeichnet durch folgende Merkmale :

a) Die Befestigungsplatte hat die Form eines Rasterrahmens (8), dessen Rasteröffnungen (12-15) einheitlich und gleich groß und durch Stege (7) gebildet sind,

b) jede der Funktionseinheiten (2) weist die gleichen, den Rasteröffnungen (12-15) entsprechenden äußeren Abmessungen auf und besteht wahlweise aus einem einzigen Teil oder ist aus mehreren, miteinander kombinierbaren Teilen zusammengesetzt,

c) jede der Funktionseinheiten (2) ist von außen in jede beliebige Rasteröffnung (12-15) einschiebbar sowie darin arretierbar und weist Verblendkanten (5), auf, derart, daß die zusammenwirkenden Verblendkanten den Rasterrahmen (8) und dessen Rasterstege (7) vollständig überdecken,

d) die Form der Rasteröffnungen und der daran angepaßten Funktionseinheiten (2) ist derart, daß jede Funktionseinheit durch einfaches Umstecken in mindestens zwei Positionen, die sich durch eine Drehung um 90° relativ zum Rasterrahmen (8) unterscheiden, in jede Rasteröffnung eingeschoben werden kann.

2. Türanlage nach Anspruch 1, dadurch gekennzeichnet, daß eine Schwenkeinrichtung in Form von Gelenken (17) vorgesehen ist, derart, daß der Drehpunkt des Gelenkes nahe der Außenkante (52) des Rasterrahmens bzw. einer dort vorgesehenen Verblendleiste (3) liegt, so daß das Schwenkvolumen über die Projektion des Rasterrahmens nicht hinausgeht.

3. Türanlage nach Anspruch 2, dadurch gekennzeichnet, daß die Gelenke (17) aus zwei einstückig mit dem Rasterrahmen (8) ausgebildeten, um 90° nach außen abgewinkelten Laschen (18) besteht, die an ihren freien Enden über Gelenkbolzen (21) mit den freien Enden von entsprechenden L-förmigen Gegenlaschen (19) verbunden sind.

4. Türanlage nach Anspruch 2 oder 3, dadurch gekennzeichnet, daß die Schwenkeinrichtung in Form eines Kunststoff-Filmscharniers ausgebildet ist, derart, daß der Drehpunkt in einer Schwächungslinie an der Verbindungskante zwischen Gehäuse und Rasterrahmen liegt.

5. Türanlage nach Anspruch 2 oder 3, dadurch gekennzeichnet, daß das freie Ende der L-förmigen Gegenlasche (19) an Paßschienen (23), welche an der inneren Seitenwand des Gehäuses (1) vorgesehen sind, mittels Schrauben (22) befestigt ist, wobei der entsprechende Durchbruch (24) des Gehäuses (1) vorzugsweise ein Längsschlitz zum Justieren des Rasterrahmens (8) gegenüber dem Gehäuse (1) ist.

6. Türanlage nach Anspruch 5, dadurch gekennzeichnet, daß der Durchbruch (24) des Gehäuses (1) mit einem aufspreizbaren, an der L-förmigen Gegenlasche (19) vorgesehenen Federhaken (53) für eine Rastbefestigung zusammenwirkt.

7. Türanlage nach einem der Ansprüche 1-6, gekennzeichnet durch eine flexible Anschlagschnur (54) zwischen Rasterrahmen (8) und Gehäuse (1), derart, daß der tüförmige Rasterrahmen etwa bei einem Öffnungswinkel von 90° gehalten wird.

8. Türanlage nach einem der Ansprüche 1-7, gekennzeichnet durch ein Schloß an der dem Gelenk gegenüberliegenden Seite des Rasterrahmens (8), das vorzugsweise ein Verriegelungsschloß (25) ist, dessen zwei Riegel (26, 27) über im Rasterrahmen (8) vorgesehene Aussparungen (28, 29) an den Enden dieser Riegel in Ösen (30, 31) eingreifen, welche an der gegenüberliegenden Kante des Gehäuses (1) vorgesehen sind.

9. Türanlage nach einem der Ansprüche 1-8, dadurch gekennzeichnet, daß Gelenk (17) und Schloß (25) durch Verblendleisten (3, 4) aus Kunststoff abgedeckt sind, die in Bauhöhe, Form und Farbe den verwendeten Funktionseinheiten (2) angepaßt sind.

10. Türanlage nach einem der Ansprüche 1-9, gekennzeichnet durch eine Kunststoffkammer (32) innerhalb der Abdeckleisten (3), die nach außen hin eine oder mehrere kleine Öffnungen (55) aufweist, um ein Mikrophon aufzunehmen, das über ein Kabel mit einer Funktionseinheit (2) verbunden ist.

11. Türanlage nach einem des Ansprüche 1-10, dadurch gekennzeichnet, daß das Rückteil des Gehäuses (1) aus einer umlaufenden Umrandung (34) besteht, an deren Ecken schlitzförmig diagonal angeordnete Befestigungslöcher (36) für eine Befestigung an einem Unterputzgehäuse (9) sowie Verstärkungsstege (35) vorgesehen sind und daß an den Seiten des Gehäuses (1) Führungsrillen (37) für Spannklauen (56) vorgesehen sind, die mittels Schrauben (57) innerhalb dieser Rillen geführt werden können.

12. Türanlage nach einem der Ansprüche 1-11, dadurch gekennzeichnet, daß an abgestuften inneren Seitenflächen (39) der Funktionseinheiten (2) in Aussparungen (40) unter Federspannung stehende Spreizklemmen (41), vorgesehen sind, welche beim Einschieben der Funktionseinheiten in den Rasterrahmen (8) einrasten und zum Entfernen der Funktionseinheiten in die Aussparungen (40) entgegen der Federkraft eindrückbar sind.

13. Türanlage nach einem der Ansprüche 1-10, dadurch gekennzeichnet, daß der Rasterrahmen (8) im wesentlichen flach ist, aus Kinststoff oder vorzugsweise aus Blech besteht und vorzugsweise seitliche, ins Innere des Gehäuses (1) gerichtete Stabilisierungsrahmen (58) aufweist, die im Bereich der Spreizklemmen (41) der eingeschobenen Funktionseinheiten (2) Aussparungen (59) aufweisen.

14. Türanlage nach einem der Ansprüche 1-13, dadurch gekennzeichnet, daß der Rasterrahmen (8) aus gleich großen quadratischen Rasteröffnungen (6;

12-15) besteht.

15. Türanlage nach einem der Ansprüche 1-14, gekennzeichnet durch ein Unterputzgehäuse (9) mit an den Ecken angegossenen Schraubenmuttern (42), in welche das Gehäuse (1, 1') über die Längsschlitze (36) einschraubbar ist.

16. Türanlage nach einem der Ansprüche 1-15, gekennzeichnet durch einen Abdicht-, Ausgleich- und Blendrahmen (10) für das Gehäuse (1).

17. Türanlage nach Anspruch 16, dadurch gekennzeichnet, daß der Rahmen (10) über eine Abdichtung (48) bei der Befestigung des Gehäuses (1) an die Wand gepreßt wird.

18. Türanlage nach Anspruch 16 oder 17, dadurch gekennzeichnet, daß der Abdicht-, Ausgleich- und Blendrahmen (10) im wesentlichen einen nach innen offenen U-förmigen Querschnitt sowie eine umlaufende Auflagerkante (43) für das Gehäuse (1) aufweist, wobei in die so entstandene Ringnut mit U-förmigem Querrschnitt eine Gummidichtung (48) einlegbar ist, vorzugsweise mit mehreren seitlichen Berührungsrippen (45), einem der Wand zugewandten Hohlraum (46) und mehreren, vorzugsweise zwei, abgerundeten, mit der Wand in Berührung stehenden Berührung stehenden Berührungslippen (47).

19. Türanlage nach einem der Ansprüche 1-18, dadurch gekennzeichnet, daß die Funktionseinheiten (2) aus einem Innenteil (39) und einem Außenteil bestehen, wobei das Außenteil die Verblendkanten (5) bildet und das Innenteil eine Abstufung zum Einsetzen in die Rasteröffnungen (6 ; 12-15) aufweist.

20. Türanlage nach einem der Ansprüche 1-19, gekennzeichnet durch eine Abdeckhaube (51), deren Außenabmessungen den Außenabmessungen der Türanlage, insbesondere des Abdicht- Ausgleich- und Blendrahmens (10) angepaßt sind und die aus dünnem, weichem transparentem und witterungsbeständigem Kunststoff wie Polyäthylen besteht.

21. Anlage nach einem der Ansprüche 1-20, dadurch gekennzeichnet, daß für das Gelenk (17) eine Verblendleiste (3) und für das Schloß (25) eine weitere Verblendleiste (4) vorgesehen sind, welche geringfügig über den Rasterrahmen vorstehen, um eine einheitliche Fläche mit den aufgesetzten Funktionseinheiten (2) zu bilden, und welche in Bauhöhe, Form und Farbe an die eingesetzten Funktionseinheiten angapaßt sind.

## Claims

1. Door system comprising a housing (1), with functional units (2) of different functions such as name plates, bell buttons, door loudspeakers and the like, with a mounting plate for jointly receiving the individual functional units and showing several openings arranged side by side and/or one upon the other, said mounting plate being hingedly and lockably connected with the housing, and with sealing and facing means, characterized in that

a) the mounting plate is in the form of a raster frame (8), whose raster openings (12-15) are uniform and of the same size and defined by webs (7),

b) each of the functional units (2) shows the same outer dimensions corresponding to the raster openings (12-15) and consists alternatively of one single part or is composed of several parts which can be combined with each other,

c) each of the functional units (2) is insertable from the outside into any one of the raster openings (12-15) and lockable therein and shows facing edges (5) such that the cooperating facing edges completely cover the raster frame (8) and the raster webs (7) thereof,

d) the shape of the raster openings and the functional units (2) adapted thereto is such that each functional unit can be inserted into each raster opening at at least two positions which differ by a rotation of 90° relative to the raster frame (8) by differently rearranging each functional unit which can be achieved in a simple manner.

2. Door system as claimed in claim 1, characterized in that a pivoting mechanism in the form of hinges (17) is provided such that the pivot point of the hinge is near the outer edge (52) of the raster frame or, respectively, of a facing (3) provided thereon, so that the volume of pivot does not exceed the projection of the raster frame.

3. Door system as claimed in claim 2, characterized in that the hinges (17) consist of two brackets (18) which are integrally formed with the raster frame (8) and are outwardly bent by 90°, the free ends of said brackets being joined via hinge pins (21) to the free ends of the corresponding L-shaped counterbrackets (19).

4. Door system as claimed in claim 2 or 3, characterized in that the pivoting mechanism is a plastics film hinge such that the pivot point lies along a weakening line at the connecting edge between housing and raster frame.

5. Door system as claimed in claim 2 or 3, charaterized in that the free end of the L-shaped counter-bracket (19) is secured by means of screws (22) to adjusting rails (23) provided on the inner side wall of the housing (1), wherein the corresponding through-opening (24) of the housing (1) preferably is an elongated slot for adjusting the raster frame (8) relative to the housing (1).

6. Door system as claimed in claim 5, characterized in that the through-opening (24) of the housing (1) cooperates with a resilient hook (53) adapted to be spread apart and provided on the L-shaped counterbracket (19) for achieving a locking action.

7. Door system as claimed in any of the claims 1 to 6, characterized by a flexible stop cord (54) provided between raster frame (8) and housing (1) such that the door-shaped raster frame is retained at an opening angle of about 90°.

8. Door system as claimed in any of the claims 1 to 7, characterized by a lock on the side of the raster frame (8) opposite to the hinge, said lock preferably being a bar-type lock (25) whose two bars (26, 27) engage in lugs (30, 31) via notches (28, 29) provided in the raster frame (8) at the ends of said bars, said lugs being provided on the opposite edge of the housing (1).

9. Door system as claimed in any of the claims 1 to 7, characterized in that the hinge (17) and the lock (25) are covered by facings (3, 4) of plastics material, said facings being matched to the respective functional units (2) as to height, shape and colour.

10. Door system as claimed in any of the claims 1 to 9, characterized by a plastics chamber (32) inside of the facings (3), said chamber being formed with one or plural small openings (55) open to the outside for receiving a microphone, which is connected via a cable to a functional unit (2).

11. Door system as claimed in any of the claims 1 to 10, characterized in that the rear portion of the housing (1) consists of a continuous edging (34), the corners of which are provided with slot-like diagonally disposed mounting holes (36) for mounting to a concealed casing (9), and of stiffening webs (35), and that the sides of the housing (1) are formed with guide grooves (37) for clamping jaws (56) adapted to be guided by means of bolts (57) within said grooves.

12. Door system as claimed in any of the claims 1 to 11, characterized in that spring-loaded expansion clips (41) are provided in recesses (40) formed on stepped inner side faces (39) of the functional units (2), said expansion clips latching into the raster frame (8) when the functional units are inserted and being adapted to be pressed into the recesses (40) against the action of the springs for removal of the functional units.

13. Door system as claimed in any of the claims 1 to 10, characterized in that the raster frame (8) is substantially flat, consists of plastics material or preferably of sheet metal and preferably includes lateral stabilizing frames (58) directed towards the interior of the housing (1), said stabilizing frames being formed with cutouts (59) in the region of the expansion clips (41) of the inserted functional units (2).

14. Door system as claimed in any of the claims 1 to 13, characterized in that the raster frame (8) consists of equal-sized square raster openings (6 ; 12-15).

15. Door system as claimed in any of the claims 1 to 14, characterized by a concealed casing (9) with nuts (42) integrally cast with the corners thereof into which nuts the housing (1) may be threaded via the elongated slots (36).

16. Door system as claimed in any of the claims 1 to 15, characterized by a sealing, balancing and blind frame (10) for the housing (1).

17. Door system as claimed in claim 16, characterized in that the frame (10) is pressed against the wall via a sealing means (48) when the housing (1) is mounted.

18. Door system as claimed in claim 16 or claim 17, characterized in that the sealing, balancing and blind frame (10) is of essentially U-shaped, inwardly open cross-section and includes a continuous supporting-edge (43) for the housing (1), wherein a rubber gasket (48) may be placed into the thus formed annular groove of U-shaped cross-section, said rubber gasket preferably including plural lateral contact ribs (45), a cavity (46) facing the wall, and plural, preferably two, rounded-off contact lips (47) contacting the wall.

19. Door system as claimed in any of the claims 1 to 18, characterized in that the functional units (2) consist of an inner part (39) and an outer part, the outer part comprising the facing edges (5) and the inner part being formed with a stepped portion for insertion into the raster openings (6) ; 12-15).

20. Door system as claimed in any of the claims 1 to 19, characterized by a cover (51) having its external dimensions matched to those of the door system, especially of the sealing, balancing and blind frame (10), said cover consisting of thin, soft, transparent and weatherproof plastics such as polyethylene.

21. Door system as claimed in any of the claims 1 to 20, characterized in that a facing (3) is provided for the hinge (17) and a further facing (4) for the lock (25), said facings protruding slightly beyond the raster frame to form a uniform surface with the mounted functional units (2) and which are matched to the inserted functional units as to height, shape and colour.

## Revendications

1. Installation de porte comprenant un boîtier (1), des unités fonctionnelles (2) remplissant des fonctions diverses telles que plaques, boutons de sonnette, haut-parleurs et dispositifs similaires, et une plaque de fixation destinée à recevoir ensemble plusieurs unités fonctionnelles dans plusieurs ouvertures disposées les unes à côté ou les unes au-dessus des autres, cette plaque étant pivotante par rapport au boîtier (1) et pouvant être arrêtée sur celui-ci, ainsi que des moyens d'étanchement et de parement, ayant les caractéristiques suivantes :

a) la plaque de fixation a la forme d'un cadre de grille (8) dont les ouvertures (12-15) sont uniformes, ont les mêmes dimensions et sont formées de traverses (7),

b) chacune des unités fonctionnelles (2) présente les mêmes dimensions extérieures adaptées à celles des ouvertures de la grille (12-15) et se compose au choix d'une seule pièce ou de plusieurs pièces pouvant être combinées les unes aux autres,

c) chacune des unités fonctionnelles (2) peut être insérée de l'extérieur et être arrêtée dans une quelquonque des ouvertures de la grille (12-15), et est munie de rebords de parement (5) de telle sorte que ces rebords de parement recouvrent complètement le cadre de grille (8) et ses traverses (7),

d) la forme des ouvertures de la grille et des unités fonctionnelles (2) y adaptées est telle que chacune des unités fonctionnelles peut être introduite dans une ouverture quelquonque de la grille en au moins deux positions se distinguant l'une de l'autre par une rotation de 90° par rapport à l'ouverture de grille.

2. Installation de porte selon la revendication 1, caractérisée en ce qu'est prévu un dispositif de pivotage en forme d'articulations (17), le point de pivotement étant situé à proximité de l'arête extérieure (52) du cadre de grille ou d'une traverse de parement (3) qui y est disposée, de sorte que le volume pivotant ne dépasse pas le cadre de grille

3. Installation de porte selon la revendication 2, caractérisée en ce que les articulations (17) consistent en deux colliers de fixation (18) formant une seule pièce avec le cadre de grille (8) et pliés vers l'extérieur selon un angle de 90°, lesquels, à leurs extrémités libres, sont raccordés aux extrémités libres de contrecolliers en L (19) par l'intermédiaire d'axes d'articulations (21).

4. Installation de porte selon la revendication 2 ou 3, caractérisée en ce que le dispositif de pivotage a la forme d'une charnière en matière plastique dont le point de rotation se trouve dans une ligne d'atténuation de l'arête de raccord entre le boîtier et le cadre de grille.

5. Installation de porte selon la revendication 2 ou 3, caractérisée en ce que l'extrémité libre du contrecollier en L (19) est fixée à l'aide de vis (22) dans des glissières d'ajustage (23) prévues dans la paroi latérale intérieure du boîtier (1), la percée (24) correspondante dans le boîtier étant de préférence un trou oblong permettant d'ajuster la position du cadre de grille (8) par rapport au boîtier (1).

6. Installation de porte selon la revendication 5, caractérisée en ce que la percée (24) du boîtier (1) coopère avec un crochet à ressort (53) prévu sur le contrecollier en L (19) pour former une fixation à cliquet.

7. Installation de porte selon l'une des revendications 1 à 6, caractérisée par une corde de retenue (54) reliant le cadre de grille (8) et le boîtier de telle sorte que le cadre de grille en forme de porte soit retenu en un angle d'ouverture de 90°.

8. Installation de porte selon l'une des revendications 1 à 7, caractérisée par une serrure disposée sur le côté du cadre de grille (8) opposé à l'articulation, cette serrure étant de préférence une serrure de verrouillage (25) dont les deux verrous (26, 27) s'engrènent dans des oeillets (30, 31) prévus sur l'arête opposée du boitier (1) en passant par deux évidements (28, 29) pratiqués dans le cadre de grille (8) aux extrémités de ces verrous.

9. Installation de porte selon l'une des revendications 1 à 8, caractérisée en ce que l'articulation (17) et la serrure (25) sont revêtues de baguettes de parement (3, 4) en matière plastique dont la hauteur, la forme et la couleur sont adaptées aux unités fonctionnelles (2) utilisées.

10. Installation de porte selon l'une des revendications 1 à 9, caractérisée par une chambre en matière plastique (32) à l'intérieur des baguettes de revêtement (3) qui, vers l'extérieur, présente plusieurs petites ouvertures (55) permettant de recevoir un microphone relié par un câble avec une unité fonctionnelle (2).

11. Installation de porte selon l'une des revendications 1 à 10, caractérisée en ce que la partie arrière du boîtier (1) se compose d'un bord continu (34) aux angles duquel sont prévus des nervures de renforcement (35) ainsi que des trous de fixation (36) disposés diagonalement et permettant la fixation du boîtier sur un carter encastré sous crépi (9) et que les côtés du boîtier (1) sont dotés de rainure de guidage (37) pour griffes de serrage (56) pouvant être guidées dans une de ces rainures au moyen de vis (57).

12. Installation de porte selon l'une des revendications 1 à 11, caractérisée en ce que des évidements pratiqués dans les surfaces intérieures en gradins (39) des unités fonctionnelles (2) abritent des pinces d'écartement (41) qui s'encliquètent lorsque l'on introduit les unités fonctionnelles (2) dans le cadre de grille (8) et qui peuvent être repoussées par pression dans les évidements (40) pour retirer les unités fonctionnelles du cadre.

13. Installation de porte selon l'une des revendications 1 à 12, caractérisée en ce que le cadre de grille (8) est essentiellement plat et réalisé de préférence en matière plastique ou en tôle et est muni de préférence de cadres de stabilisation (58) latéraux dirigés vers l'extérieur du boîtier qui, dans la zone des pinces d'écartement (41) des unités fonctionnelles (2) insérées, présentent des évidements.

14. Installation de porte selon l'une des revendications 1 à 13, caractérisée en ce que le cadre de grille (8) comporte des ouvertures de grille (6 ; 12-15) de dimensions égales et de préférence carrées.

15. Installation de porte selon l'une des revendications 1 à 14, caractérisée par un carter sous crépi (9) muni d'écrous y coulés (42) dans lesquels le boîtier (1) peut être boulonné par les trous oblongs (36).

16. Installation de porte selon l'une des revendications 1 à 15, caractérisée par un cadre d'étanchement, d'équilibrage et de parement (10) pour le boîtier (1).

17. Installation de porte selon l'une des revendications 1 à 16, caractérisée en ce que, au cours de la mise en place du boîtier (1), le cadre (10) est pressé contre le mur par l'intermédiaire d'un joint (48).

18. Installation de porte selon l'une des revendications 16 ou 17, caractérisée en ce que le cadre d'étanchement, d'équilibrage et de parement (10) présente essentiellement une coupe en forme de U ouvert vers l'intérieur et un rebord d'assise (43) sur le boîtier (1), la rainure circulaire à coupe en U ainsi créée pouvant recevoir un joint de caoutchouc (48), de préférence doté de plusieurs nervures de contact latérales (45), d'un espace évidement tourné vers le mur (46) et de plusieurs, de préférence deux lèvres de contact avec le mur (47).

19. Installation de porte selon l'une des revendications 1 à 18, caractérisée en ce que les unités fonctionnelles (2) comportent une partie intérieure (39) et une partie extérieure, la partie extérieure étant formée par les rebords du parement (5) et la partie intérieure présentant des gradins permettant la mise en place des unités fonctionnelles dans les ouvertures (6 ; 12-15) de la grille.

20. Installation de porte selon l'une des revendications 1 à 19, caractérisée par un couvercle (51) dont les dimensions extérieures sont adaptées aux dimensions extérieures de l'installation de porte et en particulier à celles du cadre d'étanchement, d'équilibrage et de parement (10) et est réalisé en une matière plastique mince, molle et transparente comme le polyéthylène.

21. Installation de porte selon l'une des revendications 1 à 20, caractérisée en ce que une baguette de parement (3) est prévue pour l'articulation (17) et une autre baguette de parement est prévue pour la serrure (25), lesquelles saillent légèrement au-delà du cadre de grille (8) afin de former avec les unités fonctionnelles (2) insérées une surface uniforme, et dont la forme et la couleur sont adaptées aux unités fonctionnelles utilisées.

Fig. 1

37

56

38  57  1

Einzelheit A

Fig 1a

Fig. 2

Fig. 2a

Fig. 3a

Fig. 3b

Fig. 3c

Fig. 4

Fig. 5

Fig. 6

Fig. 7

60  45  46  48  10        3        5    2

47

43

41

40

39

1

9

Fig 8